# EUROPEAN PATENT APPLICATION

(11) **EP 4 692 847 A1**
(43) Date of publication of application: **11.02.2026**
(21) Application number: 23929366.5
(22) Date of filing: 31.03.2023
(51) Int. Cl.: G01S 13/34, G01S 13/931

(54) **SIGNAL PROCESSING METHOD, AND APPARATUS**

(71) Applicant: Shenzhen Yinwang Intelligent Technologies Co., Ltd., Shenzhen, Guangdong 518110 (CN)
(72) Inventor: CHANG, Guanghong, Shenzhen, Guangdong 518129 (CN); CHENG, Zhiwen, Shenzhen, Guangdong 518129 (CN); LI, Ting, Shenzhen, Guangdong 518129 (CN)
(74) Representative: Maiwald GmbH
(86) International application number: PCT/CN2023/085354
(87) International publication number: WO 2024/197774

(57) **Abstract**

A signal processing method and apparatus are provided. The method may be applied to the field of detection technologies. The method includes: controlling a detection apparatus to transmit a detection signal, where the detection signal includes a plurality of bursts (S310); determining a stepped bandwidth of the detection signal (S320); and determining, based on the stepped bandwidth, a manner of performing peak value comparison on a cell under test, where the cell under test belongs to a first spectrogram obtained through spectrum analysis on a returned signal of the detection signal. The method may be applied to an intelligent vehicle or a new energy vehicle, can avoid a case in which a peak value comparison result is inaccurate because the detection signal is subject to stepping, and can improve contour estimation and classification recognition capabilities for a target.

## Description

### TECHNICAL FIELD

Embodiments of this application relate to the field of detection technologies, and more specifically, to a signal processing method and apparatus.

### BACKGROUND

A radar may detect a surrounding target by sending a detection signal. For example, a millimeter-wave radar may use a frequency-modulated continuous wave (frequency-modulated continuous wave, FMCW) signal as a detection signal. For a radar system, distinguishing between adjacent targets may pose a challenge, especially in terms of distinguishing between speeds and/or ranges of the adjacent targets. Increasing a range resolution of the radar can better distinguish between two adjacent targets. A bandwidth of a stepped FMCW signal is a sum of a single chirp bandwidth and a stepped bandwidth. Compared with using a conventional FMCW signal, using the stepped FMCW signal as a detection signal can improve a resolution of the radar.

Actual targets detected by the radar include a plurality of large-sized targets (which may be considered as including a plurality of point targets) with amplitude sections presenting irregular shapes on a two-dimensional spectrum. When signal processing is performed on the conventional FMCW signal, an upper cell, a lower cell, a left cell, and a right cell that are adjacent to a cell under test may be used as reference cells of the cell under test, and a cell in which a target actually exists on a two-dimensional spectrogram is determined through peak value comparison. Then, a speed and/or a range of the target can be determined based on the cell. However, using the stepped FMCW signal may cause distribution of the target on the two-dimensional spectrogram to change, and using the upper cell, the lower cell, the left cell, and the right cell that are adjacent to the cell under test as the reference cells of the cell under test may cause a case in which a non-two-dimensional peak target is not reported.

In view of this, in a scenario in which a detection signal may be subject to stepping, how to perform signal processing becomes an urgent problem to be resolved.

### SUMMARY

Embodiments of this application provide a signal processing method and apparatus, which can determine a peak value comparison manner in a stepped manner of a detection signal, can avoid a case in which a peak value comparison result is inaccurate because the detection signal is subject to stepping, can improve accuracy of a signal processing result, and can improve contour estimation and classification identification capabilities for a target.

According to a first aspect, a signal processing method is provided. The method may be performed by an intelligent driving device, or may be performed by a computing platform in the intelligent driving device, or may be performed by a chip or a processor in the computing platform. In some possible implementations, the method may be performed by a system including a detection apparatus (for example, a radar) and a computing platform, or may be performed by the detection apparatus, or may be performed by a chip or a processor in the detection apparatus.

The method includes: controlling a detection apparatus to transmit a detection signal, where the detection signal includes a plurality of bursts; determining a stepped bandwidth of the detection signal; and when the stepped bandwidth is zero, performing peak value comparison on a cell under test in a first manner, where the cell under test is a cell whose energy amplitude is greater than or equal to a first threshold, the cell under test belongs to a first spectrogram, and the first spectrogram is obtained through spectrum analysis on a returned signal of the detection signal; or when the stepped bandwidth is greater than zero, performing peak value comparison on the cell under test in a second manner; or when the stepped bandwidth is less than zero, performing peak value comparison on the cell under test in a third manner.

In this application, a manner of performing peak value comparison on the cell under test is determined based on the stepped bandwidth of the detection signal. This can flexibly determine a signal processing manner based on a stepped form of the detection signal, can be applicable to signal processing of detection signals in different stepped manners, can avoid a case in which a peak value comparison result is inaccurate because the detection signal is subject to stepping, can improve accuracy of a signal processing result, and can improve contour estimation and classification identification capabilities for a target.

With reference to the first aspect, in some implementations of the first aspect, performing peak value comparison on the cell under test in the second manner, or performing peak value comparison on the cell under test in the third manner may include: determining a first reference line corresponding to the cell under test, where a slope of the first reference line is determined based on the stepped bandwidth of the detection signal; determining, based on the first reference line, reference cells corresponding to the cell under test; and performing peak value comparison between the cell under test and the reference cells that correspond to the cell under test.

In this application, the slope of the first reference line is determined based on the stepped bandwidth. This can determine an extension direction of target energy on the first spectrogram based on the stepped bandwidth, fully use data collected by a radar, and can improve the contour estimation and classification identification capabilities for the target.

With reference to the first aspect, in some implementations of the first aspect, performing peak value comparison on the cell under test in the second manner may include: when the stepped bandwidth of the detection signal is the same as a bandwidth of the burst, selecting an upper left cell and a lower right cell of the cell under test to perform peak value comparison; or when the stepped bandwidth of the detection signal is different from a bandwidth of the burst, performing fast Fourier transform (fast Fourier transform, FFT) interpolation calculation on the returned signal of the detection signal, and selecting an upper left cell and a lower right cell of the cell under test to perform peak value comparison.

For example, when the stepped bandwidth is different from the bandwidth of the burst, after zero-padding interpolation is performed on sampling data of the returned signal of the detection signal, performing FFT on data obtained after the interpolation can obtain the first spectrogram. Based on the first spectrogram, the upper left cell and the lower right cell of the cell under test can be selected to perform peak value comparison with the cell under test.

With reference to the first aspect, in some implementations of the first aspect, performing peak value comparison on the cell under test in the third manner may include: when the stepped bandwidth of the detection signal is the same as a bandwidth of the burst, selecting a lower left cell and an upper right cell of the cell under test to perform peak value comparison; or when the stepped bandwidth of the detection signal is different from a bandwidth of the burst, performing FFT interpolation calculation on the returned signal of the detection signal, and selecting a lower left cell and an upper right cell of the cell under test to perform peak value comparison.

In this application, a peak value comparison manner can be flexibly determined based on a relationship between the stepped bandwidth and the bandwidth of the burst. This can further improve accuracy of the peak value comparison result.

With reference to the first aspect, in some implementations of the first aspect, the detection signal is a stepped frequency-modulated continuous wave FMCW signal, the stepped FMCW signal includes a plurality of chirps (chirps), each of the plurality of bursts is one chirp, a bandwidth of the chirp is a single chirp bandwidth, and determining the first reference line corresponding to the cell under test may include: determining, based on a ratio of the stepped bandwidth to the single chirp bandwidth, the first reference line corresponding to the cell under test.

In this application, the ratio of the stepped bandwidth to the single chirp bandwidth may represent an extension direction of energy of a static extension target on the first spectrogram. Therefore, in a process of determining the first reference line and the reference cells, an association between the detection signal and the first spectrogram can be fully used, and more appropriate reference cells can be determined, which can further improve the accuracy of the peak value comparison result.

With reference to the first aspect, in some implementations of the first aspect, performing FFT interpolation calculation on the returned signal of the detection signal includes: obtaining sampling data of the returned signal of the detection signal; and performing FFT on the sampling data and N pieces of data whose values are zero, to obtain the first spectrogram.

In this application, zero padding processing is performed on the sampling data, which helps adapt to an FFT acceleration algorithm, and also helps match distribution of the reference cells with the first reference line.

With reference to the first aspect, in some implementations of the first aspect, a ratio of N to a quantity of pieces of the sampling data is equal to a ratio of the stepped bandwidth to the bandwidth of the burst.

With reference to the first aspect, in some implementations of the first aspect, a sum of N and the sampling data is an integer power of 2.

With reference to the first aspect, in some implementations of the first aspect, performing peak value comparison on the cell under test in the first manner may include: selecting a left cell and a right cell of the cell under test to perform peak value comparison; or selecting an upper cell, a lower cell, a left cell, and a right cell of the cell under test to perform peak value comparison.

According to a second aspect, a signal processing apparatus is provided. The apparatus may include: a control unit, configured to control a detection apparatus to transmit a detection signal, where the detection signal includes a plurality of bursts; and a processing unit, configured to determine a stepped bandwidth of the detection signal; and when the stepped bandwidth is zero, perform peak value comparison on a cell under test in a first manner, where the cell under test is a cell whose energy amplitude is greater than or equal to a first threshold, the cell under test belongs to a first spectrogram, and the first spectrogram is obtained through spectrum analysis on a returned signal of the detection signal; or when the stepped bandwidth is greater than zero, perform peak value comparison on the cell under test in a second manner; or when the stepped bandwidth is less than zero, perform peak value comparison on the cell under test in a third manner.

With reference to the second aspect, in some implementations of the second aspect, the processing unit may be configured to: determine a first reference line corresponding to the cell under test, where a slope of the first reference line is determined based on the stepped bandwidth of the detection signal; determine, based on the first reference line, reference cells corresponding to the cell under test; and perform peak value comparison between the cell under test and the reference cells that correspond to the cell under test.

With reference to the second aspect, in some implementations of the second aspect, the processing unit may be configured to: when the stepped bandwidth of the detection signal is the same as a bandwidth of the burst, select an upper left cell and a lower right cell of the cell under test to perform peak value comparison; or when the stepped bandwidth of the detection signal is different from a bandwidth of the burst, perform FFT interpolation calculation on the returned signal of the detection signal, and select an upper left cell and a lower right cell of the cell under test to perform peak value comparison.

With reference to the second aspect, in some implementations of the second aspect, the processing unit may be configured to: when the stepped bandwidth of the detection signal is the same as a bandwidth of the burst, select a lower left cell and an upper right cell of the cell under test to perform peak value comparison; or when the stepped bandwidth of the detection signal is different from a bandwidth of the burst, perform FFT interpolation calculation on the returned signal of the detection signal, and select a lower left cell and an upper right cell of the cell under test to perform peak value comparison.

With reference to the second aspect, in some implementations of the second aspect, the stepped FMCW signal includes a plurality of chirps, each of the plurality of bursts is one chirp, a bandwidth of the chirp is a single chirp bandwidth, and the processing unit may be configured to: determine, based on a ratio of the stepped bandwidth to the single chirp bandwidth, the first reference line corresponding to the cell under test.

With reference to the second aspect, in some implementations of the second aspect, the processing unit may be configured to: obtain sampling data of the returned signal of the detection signal; and perform FFT on the sampling data and N pieces of data whose values are zero, to obtain the first spectrogram.

With reference to the second aspect, in some implementations of the second aspect, a ratio of N to a quantity of pieces of the sampling data is equal to a ratio of the stepped bandwidth to the bandwidth of the burst.

With reference to the second aspect, in some implementations of the second aspect, a sum of N and the sampling data is an integer power of 2.

With reference to the second aspect, in some implementations of the second aspect, the processing unit may be configured to: select a left cell and a right cell of the cell under test to perform peak value comparison; or select an upper cell, a lower cell, a left cell, and a right cell of the cell under test to perform peak value comparison.

According to a third aspect, a signal processing apparatus is provided. The apparatus includes: a memory, configured to store a computer program; and a processor, configured to execute the computer program stored in the memory, to enable the apparatus to perform the method according to the first aspect and any one of the possible implementations of the first aspect.

According to a fourth aspect, a signal processing system is provided. The system includes a radar and a computing platform, and the computing platform includes the apparatus according to the second aspect or the third aspect and any one of the possible implementations of the second aspect or the third aspect.

For example, the apparatus may obtain a returned signal of a detection signal, and may perform signal processing on sampling data of the returned signal.

According to a fifth aspect, a computer program product is provided. The computer program product includes computer program code. When the computer program code is run on a computer, the computer is enabled to perform the method according to the first aspect and any one of the possible implementations of the first aspect.

According to a sixth aspect, a computer-readable storage medium is provided. The computer-readable medium stores a computer program. When the computer program is run on a computer, the computer is enabled to perform the method according to the first aspect and any one of the possible implementations of the first aspect.

According to a seventh aspect, a chip is provided. The chip includes a circuit, configured to perform the method according to the first aspect and any one of the possible implementations of the first aspect.

According to an eighth aspect, an intelligent driving device is provided. The intelligent driving device includes the apparatus in the second aspect or the third aspect and any one of the possible implementations of the second aspect or the third aspect, or includes the system in the fourth aspect and any one of the possible implementations of the fourth aspect.

For example, the intelligent driving device may include a vehicle.

### BRIEF DESCRIPTION OF DRAWINGS

FIG. 1 is a functional block diagram of an intelligent driving device according to an embodiment of this application;
FIG. 2 is a diagram of a vehicle-mounted radar and an arrangement location according to an embodiment of this application;
FIG. 3 is a diagram of a time-frequency characteristic of a frequency-modulated continuous wave according to an embodiment of this application;
FIG. 4 is a diagram of a time-frequency characteristic of a stepped frequency-modulated continuous wave according to an embodiment of this application;
FIG. 5 is a diagram of a system architecture of a radar according to an embodiment of this application;
FIG. 6 is a diagram of a signal processing scenario according to an embodiment of this application;
FIG. 7 is a diagram of another signal processing scenario according to an embodiment of this application;
FIG. 8 is a diagram of another signal processing scenario according to an embodiment of this application;
FIG. 9 is a schematic flowchart of a signal processing method according to an embodiment of this application;
FIG. 10 is a diagram of another signal processing scenario according to an embodiment of this application;
FIG. 11 is a diagram of another signal processing scenario according to an embodiment of this application;
FIG. 12 is a diagram of another signal processing scenario according to an embodiment of this application;
FIG. 13 is a diagram of another signal processing scenario according to an embodiment of this application;
FIG. 14 is a diagram of another signal processing scenario according to an embodiment of this application;
FIG. 15A, FIG. 15B, and FIG. 15C are a schematic flowchart of a signal processing method according to an embodiment of this application;
FIG. 16 is a block diagram of a signal processing apparatus according to an embodiment of this application; and
FIG. 17 is a block diagram of another signal processing apparatus according to an embodiment of this application.

### DESCRIPTION OF EMBODIMENTS

In descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases. Only A exists, both A and B exist, and only B exists. In this application, at least one means one or more, and a plurality of means two or more. "At least one of the following items (pieces)" or a similar expression thereof means any combination of these items, including any combination of a single item (piece) or plural items (pieces). For example, at least one item (piece) of a, b, or c may indicate: a, b, c, a and b, a and c, b and c, or a, b, and c, where a, b, and c may be singular or plural.

Prefix words such as "first" and "second" in embodiments of this application are merely intended to distinguish between different objects, and impose no limitation on locations, sequences, priorities, quantities, content, or the like of the described objects. Use of prefix words such as ordinal numbers used to distinguish between the described objects in embodiments of this application does not constitute a limitation on the described objects. For descriptions of the described objects, refer to the context description in claims or embodiments, and the use of such prefix words should not constitute a redundant limitation.

The following describes technical solutions of embodiments in this application with reference to accompanying drawings.

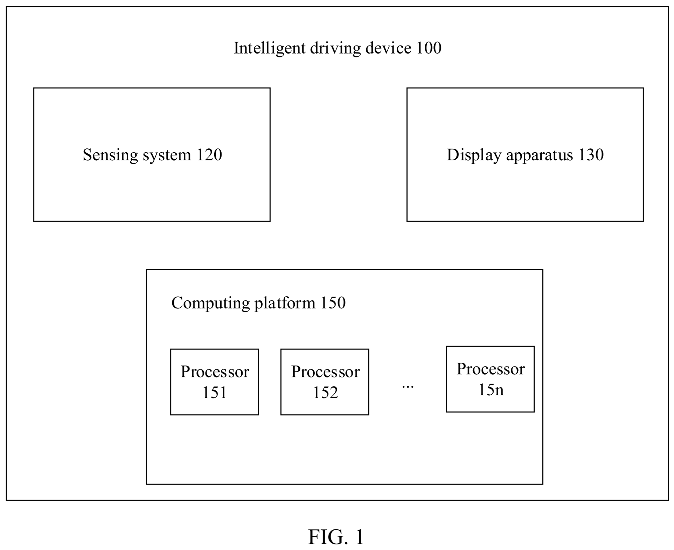

FIG. 1 is a functional block diagram of an intelligent driving device 100 according to an embodiment of this application. The intelligent driving device 100 may include a sensing system 120 and a computing platform 150. The sensing system 120 may include one or more sensors that sense ambient environment information of the intelligent driving device 100. For example, the sensing system 120 may include a positioning system. The positioning system may be a global positioning system (global positioning system, GPS), a BeiDou system, or another positioning system. The sensing system 120 may include one or more types of radars such as a lidar, a millimeter-wave radar, and an ultrasonic radar, or may include an inertial measurement unit (inertial measurement unit, IMU) and a camera apparatus. In some possible implementations, the intelligent driving device 100 may include a display apparatus 130.

Some or all functions of the intelligent driving device 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by using an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

The intelligent driving device 100 in this application may include a transportation tool on a road, a transportation tool on water, an air transportation tool, an industrial device, an agricultural device, an entertainment device, or the like. For example, the intelligent driving device 100 may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device 100 may be a transportation tool such as an airplane or a ship. For ease of explanation and description, the following uses an example in which the intelligent driving device 100 is a vehicle for description.

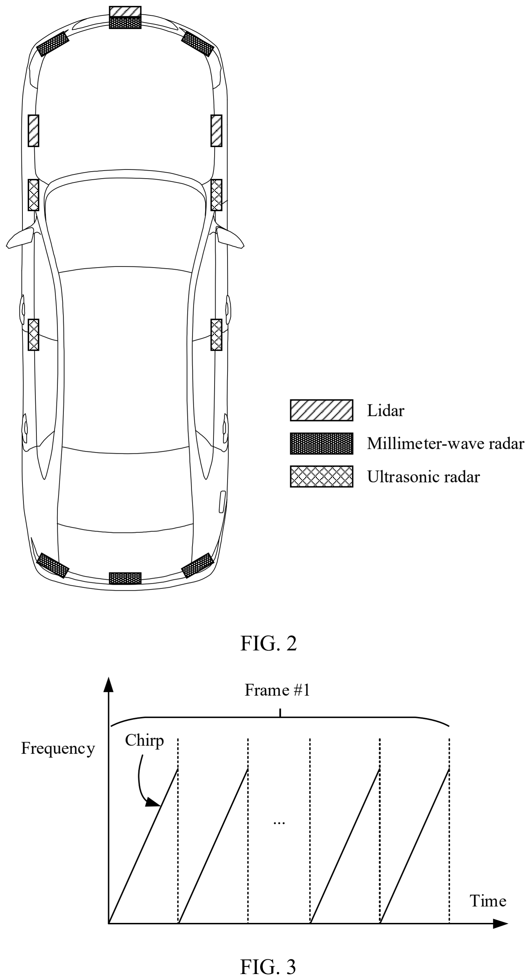

For example, FIG. 2 is a diagram of a vehicle-mounted radar and an arrangement location according to an embodiment of this application. As shown in FIG. 2, FIG. 2 shows some common types of vehicle-mounted radars and mounting positions of the radars.

As shown in FIG. 2, one or more types of radars such as a lidar, a millimeter-wave radar, and an ultrasonic radar may be disposed on the vehicle. The lidar (light detection and ranging, LiDAR) is a radar that performs detection by using a laser beam. Due to advantages of high coherence, directivity, and monochromaticity of a laser, the lidar can implement a long-range and high-precision ranging function. The millimeter-wave radar is a radar that performs detection by using a millimeter wave. Compared with optical beams such as infrared and laser beams, the millimeter wave has a strong capability of penetrating fog, smoke, and dust. Therefore, the millimeter-wave radar has an all-weather feature. In addition, a short wavelength is easy to obtain features such as a detail feature and clear contour imaging of a target, and can be used for target classification and recognition. The millimeter-wave radar may be configured to recognize a range and a speed of an object. The ultrasonic radar is a radar that performs detection by using an ultrasonic wave. An ultrasonic ranging sensor has a great advantage in short-range ranging. As shown in FIG. 2, three lidars may be disposed on the vehicle in a forward direction, a left direction, and a right direction; a total of six millimeter-wave radars may be disposed, including one in the forward direction, one in a backward direction, and four in side directions; and four ultrasonic radars may be disposed in the side directions.

It should be understood that the foregoing descriptions of types, quantities, and arrangement locations of the radars are merely examples for ease of description. In an embodiment, more or fewer types of radars may be disposed on the vehicle. In still another embodiment, more or fewer millimeter-wave radars may be disposed on the vehicle.

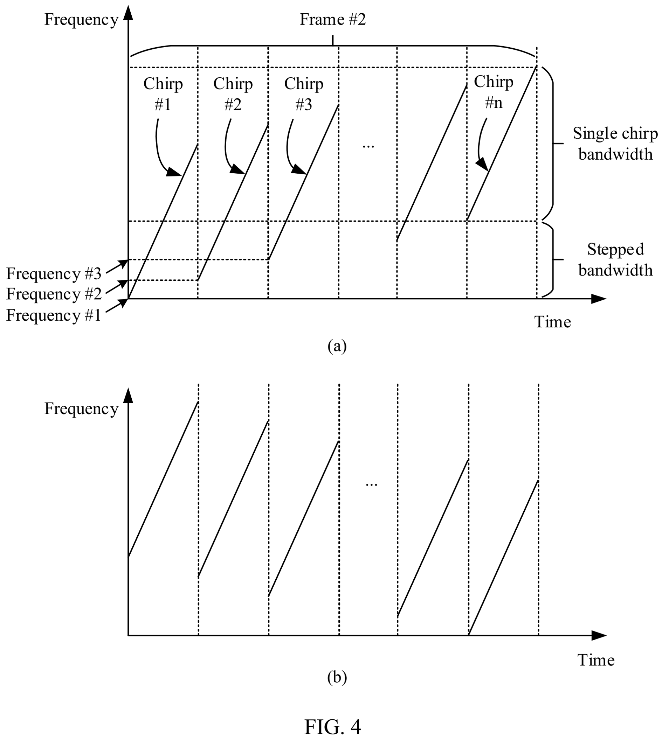

For example, radars may be classified into a pulse radar and a continuous wave radar based on forms of transmitted detection signals. The pulse radar can measure a surrounding object by using a high-frequency pulse. The continuous wave radar may include a single-frequency continuous wave radar, a multi-frequency continuous wave radar, a frequency-modulated continuous wave radar, and the like. The FMCW radar can detect a range and a speed of the surrounding object by sending an FMCW signal by using a low-cost device. Frequency modulation manners may include triangular wave modulation, sawtooth wave modulation, and the like. An FMCW signal whose frequency changes with time may be obtained through frequency modulation. The following uses the triangular wave modulation as an example to describe the FMCW signal with reference to FIG. 3 and FIG. 4.

For example, FIG. 3 is a diagram of a time-frequency characteristic of the frequency-modulated continuous wave according to an embodiment of this application. As shown in FIG. 3, after triangular wave modulation is performed, a frequency of the detection signal may linearly change with time. Each linearly changing segment may be referred to as one chirp, and a plurality of chirps (for example, 256 chirps or 512 chirps) that are sequentially sent may form a frame (for example, a frame #1). For the FMCW signal, the frame may alternatively include more or fewer chirps.

For example, FIG. 4 is a diagram of a time-frequency characteristic of a stepped frequency-modulated continuous wave according to an embodiment of this application. In a waveform of a stepped FMCW signal, a change manner of a frequency in a single chirp is similar to that in FIG. 3. Compared with a conventional FMCW shown in FIG. 3, a start frequency of each chirp of the stepped FMCW signal linearly changes. For example, as shown in (a) in FIG. 4, a frame #2 may include a plurality of chirps including a chirp #1 and a chirp #2. The chirp #1, the chirp #2, and the like are still FMCW signals, and the plurality of chirps in the frame #2 have different start frequencies. In other words, transmission frequencies of the chirp #1, the chirp #2, and the like in the frame #2 may linearly change with time. For another example, as shown in FIG. 4, start frequencies of the chirp #1, the chirp #2, and a chirp #3 are: a frequency #1, a frequency #2, and a frequency #3. A difference between start frequencies of adjacent bursts is a stepped frequency (denoted as Δf), for example, Δf = frequency #2 - frequency #1.

For example, the stepped FMCW signal may include an upward stepped FMCW signal and a downward stepped FMCW signal. The upward stepped FMCW signal may be a stepped FMCW signal whose stepped frequency is positive, and the downward stepped FMCW signal may be a stepped FMCW signal whose stepped frequency is negative. It may also be understood that the upward stepped FMCW signal is an FMCW signal whose stepped bandwidth is greater than zero, and the downward stepped FMCW signal is an FMCW signal whose stepped bandwidth is less than zero. For example, (a) in FIG. 4 shows a time-frequency characteristic of the upward stepped FMCW signal, and (b) in FIG. 4 shows a time-frequency characteristic of the downward stepped FMCW signal. For another example, the FMCW signal in FIG. 3 is the conventional FMCW signal, and may be understood as an FMCW signal whose stepped bandwidth is zero, or may be understood as an FMCW signal whose stepped frequency is zero.

For example, a bandwidth of a single frame of signal of the stepped FMCW signal may include a sum of a bandwidth of a single chirp signal (which may be referred to as a single chirp bandwidth, or a single chirp bandwidth) and the stepped bandwidth. A bandwidth of an entire frame of signal can be adjusted in a stepped manner, so that a range resolution of the radar can be improved. The stepped bandwidth may be a difference between a start frequency of a first chirp and a start frequency of a last chirp in the frame of signal. For example, as shown in (a) in FIG. 4, chirps from the chirp #1, the chirp #2, the chirp #3, and to a chirp #n in the frame #2 have a same bandwidth, that is, the single chirp bandwidth. A first chirp in the frame #2 is the chirp #1, a last chirp is the chirp #n (n is an integer greater than or equal to 3), and a bandwidth between the start frequency of the chirp #1 and a start frequency of the chirp #n is the stepped bandwidth.

For example, a detection signal used by the radar may include a plurality of bursts. For example, in a single burst, linear frequency modulation may be performed from a low frequency to a high frequency, as shown in the chirp in FIG. 3 or FIG. 4. For another example, non-linear frequency modulation may be performed from a low frequency to a high frequency in a single burst. For another example, in a single burst, stepped frequency modulation may be used from a low frequency to a high frequency. For another example, the detection signal may alternatively use a phase-modulated continuous wave (phase-modulated continuous wave, PMCW) in a stepped form. A modulation scheme of the detection signal is not limited in embodiments of this application.

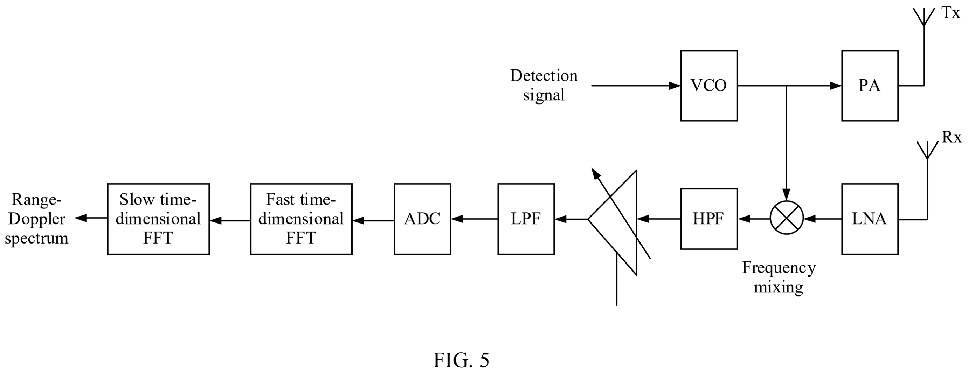

For example, FIG. 5 is a diagram of a system architecture of the radar according to an embodiment of this application. As shown in FIG. 5, on a transmit side, after the detection signal is processed by a voltage controlled oscillator (voltage controlled oscillator, VCO), a power amplifier (power amplifier, PA), and the like, the detection signal may be radiated to space through a transmit (transmit, Tx) antenna. On a receive side, an echo signal reflected by a target may be received by a receive (receive, Rx) antenna, and after the echo signal is processed by a plurality of apparatuses such as a low noise amplifier (low noise amplifier, LNA), a high-pass filter (high-pass filter, HPF), a low-pass filter (low-pass filter, LPF), and an analog-to-digital converter (analog-to-digital converter, ADC), fast time-dimensional FFT and slow time-dimensional FFT may be performed on the echo signal. After FFT processing is performed twice, a range-Doppler spectrum (range-Doppler spectrum) may be obtained, which may also be referred to as a two-dimensional spectrum or a range-speed spectrum.

An example in which the detection signal is an FMCW signal is used. The radar may continuously send a plurality of (for example, N) FMCW signals. The plurality of FMCW signals are received by the receive antenna after the plurality of FMCW signals are reflected by the target, and are stored in a storage unit after frequency mixing processing and ADC sampling (for example, sampling is performed on each FMCW signal at M points) are performed on the plurality of FMCW signals. In this case, a total of M×N pieces of data are obtained through ADC sampling performed on the N FMCW signals. The M×N pieces of data may be arranged in a form of a two-dimensional matrix. A dimension formed by sampling data corresponding to a same FMCW echo signal is referred to as a fast time dimension, and a dimension formed by sampling data between the plurality of FMCW signals is referred to as a slow time dimension. Range information may be obtained through processing performed on data in the fast time dimension, and speed information may be obtained through processing performed on data in the slow time dimension. For example, a range spectrum may be obtained through FFT processing performed on the data in the fast time dimension, and the range-Doppler spectrum may be obtained through second-dimension FFT processing performed on all range spectrums. For another example, a form of a single point target presented on the two-dimensional spectrum is a dot region. Locations of the dot region on two-dimensional coordinates may respectively correspond to a range and a speed of the target. A frequency in the fast time dimension may correspond to range information of the target, a frequency in the slow time dimension may correspond to speed information of the target, and an area of the dot region may correspond to a resolution of the target.

It should be understood that the foregoing system architecture may be applicable to the FMCW radar, and the system architecture is merely an example for ease of description. In some possible implementations, the system architecture of the radar may include more or fewer modules. For example, when the detection signal is a PMCW signal, the system architecture may include a local oscillator or the like.

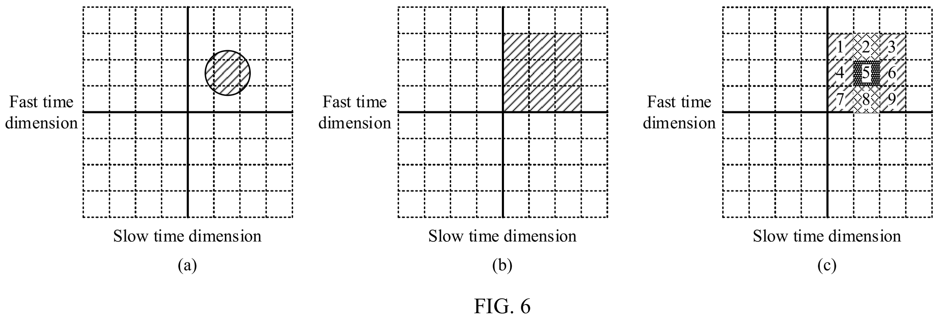

In some possible implementations, a value of each cell in the spectrogram may be compared with a preset value in a constant false alarm rate (constant false alarm rate, CFAR) detection manner, to determine whether a target is detected on the cell. Distribution of the target in the spectrogram may be determined through the CFAR, that is, a cell corresponding to the target can be determined in the spectrogram. Further, through peak grouping (peak grouping), a value of a cell under test in a plurality of cells are compared with values of an upper cell, a lower cell, a left cell, and a right cell that are adjacent to the cell under test, to determine a specific cell in which the target is located. The following uses an example in which the detection signal is the FMCW signal to briefly describe, with reference to FIG. 6 to FIG. 8, a problem existing in the foregoing signal processing manner used when the detection signal is subject to stepping.

For example, FIG. 6 is a diagram of a signal processing scenario according to an embodiment of this application. As shown in (a) in FIG. 6, the single point target is presented on a two-dimensional spectrogram as a dot region including a plurality of cells. As shown in (b) in FIG. 6, determining a cell whose energy amplitude is greater than a first threshold on the spectrogram may determine distribution of the target on the spectrogram. For example, the plurality of cells in the dot region may be determined through the CFAR. As shown in (c) in FIG. 6, values of cells 2, 5, and 8 may be compared with values of respective left and right cells that are adjacent to the cells 2, 5, and 8, to determine whether the cells 2, 5, and 8 are peak value cells. For example, the left and right cells (that is, cells 1 and 3) that are adjacent to the cell 2 may be used as reference cells for one-dimensional peak value comparison on the cell 2. When the value of the cell 2 is greater than values of the cells 1 and 3, the cell 2 is a one-dimensional peak value cell. For another example, it is assumed that the cells 2, 5, and 8 are all one-dimensional peak value cells, the cell 5 and an upper cell and a lower cell (that is, the cells 2 and 8) that are adjacent to the cell 5 may be used as reference cells for two-dimensional peak value (which may also be referred to as cross peak value) comparison on the cell 5. When the value of the cell 5 is greater than the values of the cells 2 and 8, the cell 5 is a two-dimensional peak value cell. Further, a range and a speed of the cell may be determined based on the cell 5.

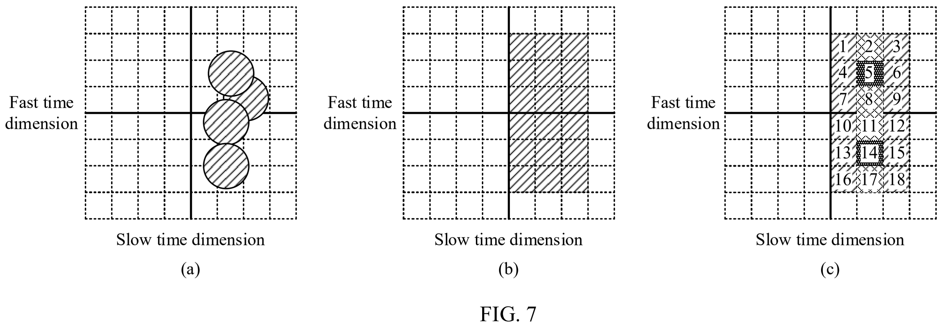

In an actual scenario, targets detected by the FMCW radar may include a large-sized target (it may be considered that the large-sized target includes a plurality of single point targets). An amplitude section of the large-sized target presents an irregular shape on the two-dimensional spectrum, and a range extension length of the large-sized target is greater than the range resolution. As a result, the target occupies a plurality of cells on the two-dimensional spectrum, and after peak grouping processing is performed, a plurality of target cells are detected. For example, FIG. 7 is a diagram of another signal processing scenario according to an embodiment of this application. A detection signal used may be understood as an FMCW signal whose stepped frequency is zero. As shown in (a) in FIG. 7, the large-sized target (denoted as a target #1) may be represented as a plurality of dot regions on the two-dimensional spectrogram. CFAR processing is performed on (a) in FIG. 7, and (b) in FIG. 7 may be obtained. Cells in a shadow part in (b) in FIG. 7 are cells corresponding to the target #1. As shown in (c) in FIG. 7, it is assumed that cells 2, 5, 8, 11, 14, and 17 are the one-dimensional peak value cells. Values of the one-dimensional peak value cells are compared with values of reference cells of the one-dimensional peak value cells. This may determine the cell 5 and cell 14 as two-dimensional peak value cells, and may further determine range and speed information of each part of the target #1 based on the two-dimensional peak value cells 5 and 14.

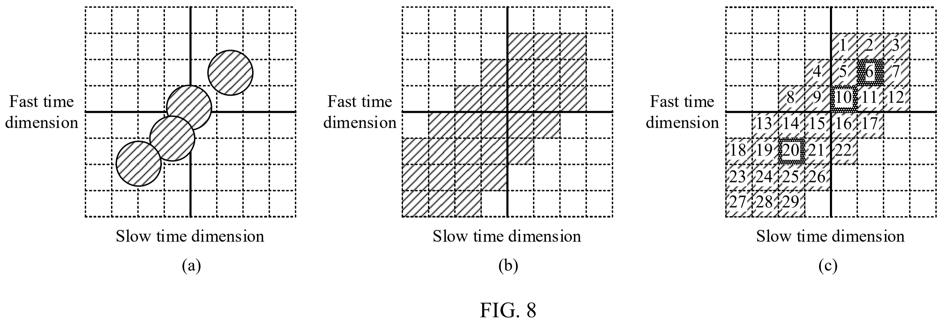

When a stepped bandwidth of the detection signal is greater than zero or less than zero, the single point target is still represented as the dot region on the two-dimensional spectrogram. However, extension targets are distributed in a shape of a diagonal line on the two-dimensional spectrogram, and a slope of the diagonal line is related to the stepped bandwidth. Because distribution of the extension targets is no longer perpendicular to the slow time dimension, a left cell and a right cell that are adjacent the cell under test are still used as reference cells of the cell under test for one-dimensional peak value comparison, which causes a case in which a non-two-dimensional peak target is not reported. For example, FIG. 8 is a diagram of another signal processing scenario according to an embodiment of this application. As shown in (a) in FIG. 8, when a range and a speed of the target #1 are determined by using an upward stepped FMCW signal, a plurality of single point targets (the plurality of single point targets are the extension targets) corresponding to the target #1 are distributed in the shape of the diagonal line on the two-dimensional spectrogram, and CFAR results of the plurality of extension targets may be as shown in (b) in FIG. 8. A result of peak grouping processing still performed in the foregoing manner may be as shown in (c) in FIG. 8, where cells 6, 10, and 20 are detected two-dimensional peak value cells. Because distribution of the extension targets on the two-dimensional spectrogram is not perpendicular to the slow time dimension, a left cell and a right cell that are adjacent to each cell under test are used as reference cells for one-dimensional peak value comparison, and an upper cell and a lower cell that are adjacent to the one-dimensional peak value cell are used as reference cells for two-dimensional peak value comparison. As a result, a quantity of detected peak value cells is less than a quantity of actual extension targets, which causes missing reporting. There may be large errors in the range and the speed that are of the target #1 and that are determined based on this result.

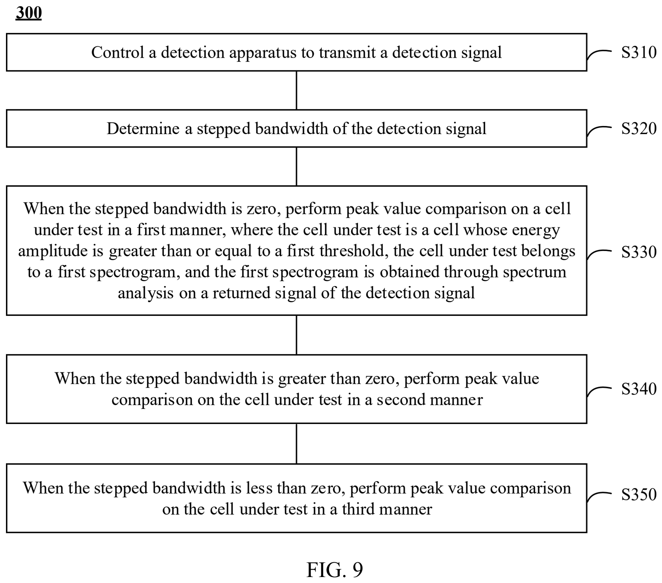

For example, FIG. 9 is a schematic flowchart of a signal processing method according to an embodiment of this application. For example, the method 300 may be performed by an intelligent driving device, or may be performed by a computing platform in the intelligent driving device, or may be performed by a chip or a processor in the computing platform. For another example, the method 300 may alternatively be performed by a system including a radar and a computing platform. For another example, the method 300 may be performed by a radar, or may be performed by a chip or a processor in the radar. The method 300 may include the following steps.

S310: Control a detection apparatus to transmit a detection signal, where the detection signal includes a plurality of bursts.

For example, the detection signal includes the plurality of bursts. The detection signal may include two bursts, or the detection signal may include a group of bursts, for example, the FMCW detection signal shown in FIG. 3 or FIG. 4.

In some possible implementations, frequency modulation may be performed on a single burst of the detection signal in a linear manner, for example, the chirp shown in FIG. 3 or FIG. 4, or frequency modulation may be performed in a non-linear manner, or frequency modulation may be performed in a step function manner. In some possible implementations, the detection signal may alternatively use a stepped phase-modulated continuous wave (phase-modulated continuous wave, PMCW).

For example, the detection apparatus may include a radar. For example, when the method is performed by the computing platform in the intelligent driving device, the computing platform may control, by using an internal circuit of the intelligent driving device, the radar to transmit the detection signal. For another example, when the processor in the radar performs the method, the processor may control the radar to transmit the detection signal. For another example, the detection apparatus may be the millimeter-wave radar or a radar in another form.

S320: Determine a stepped bandwidth of the detection signal.

For example, a manner of performing peak value comparison on the cell under test may be determined based on the stepped bandwidth of the detection signal. Whether the detection signal is subject to stepping and a used stepped manner may be determined based on the stepped bandwidth.

S330: When the stepped bandwidth is zero, perform peak value comparison on the cell under test in a first manner, where the cell under test is a cell whose energy amplitude is greater than or equal to a first threshold, the cell under test belongs to a first spectrogram, and the first spectrogram is obtained through spectrum analysis on a returned signal of the detection signal.

For example, the first spectrogram may be obtained through spectrum analysis on the returned signal of the detection signal, and the cell under test may be a cell whose energy threshold on the first spectrogram is greater than or equal to the first threshold. For example, the first spectrogram may be the range-Doppler spectrum in FIG. 5. For another example, when the detection signal is the FMCW signal, the first spectrogram may be as shown in FIG. 6. For another example, the first threshold may be a threshold used for constant false alarm rate detection. For another example, the cell under test may be the cell corresponding to the target #1 in (b) in FIG. 7.

For example, performing peak value comparison on the cell under test may be to compare a value of the cell under test with values of corresponding reference cells, to determine whether the cell under test is the peak value cell. For example, as shown in FIG. 6, an example in which the cell 5 is the cell under test is used, and the value of the cell 5 may be compared with values of reference cells (for example, cells 4 and 6) corresponding to the cell 5, to determine whether the cell 5 is the peak value cell.

For example, performing peak value comparison on the cell under test in the first manner may include: selecting a left cell and a right cell of the cell under test to perform peak value comparison; or selecting an upper cell, a lower cell, a left cell, and a right cell of the cell under test to perform peak value comparison. For example, as shown in FIG. 6, the example in which the cell 5 is the cell under test is used, and the value of the cell 5 may be compared with values of the cells 4 and 6, to determine whether the cell 5 is the one-dimensional peak value cell. For another example, the value of the cell 5 may be compared with the values of the cells 2, 4, 6 and 8, to determine whether the cell 5 is a cross peak value cell.

S340: When the stepped bandwidth is greater than zero, perform peak value comparison on the cell under test in a second manner.

In some possible implementations, performing peak value comparison on the cell under test in the second manner may include: when the stepped bandwidth of the detection signal is the same as a bandwidth of the burst, selecting an upper left cell and a lower right cell of the cell under test to perform peak value comparison.

In some possible implementations, performing peak value comparison on the cell under test in the second manner may include: when the stepped bandwidth of the detection signal is different from a bandwidth of the burst, performing FFT interpolation calculation on the returned signal of the detection signal, and selecting an upper left cell and a lower right cell of the cell under test to perform peak value comparison.

S350: When the stepped bandwidth is less than zero, perform peak value comparison on the cell under test in a third manner.

In some possible implementations, performing peak value comparison on the cell under test in the third manner may include: when the stepped bandwidth of the detection signal is the same as a bandwidth of the burst, selecting an upper left cell and a lower right cell of the cell under test to perform peak value comparison.

In some possible implementations, performing peak value comparison on the cell under test in the third manner may include: when the stepped bandwidth of the detection signal is different from a bandwidth of the burst, performing FFT interpolation calculation on the returned signal of the detection signal, and selecting an upper left cell and a lower right cell of the cell under test to perform peak value comparison.

For example, if the stepped bandwidth is greater than zero, it may be understood that the stepped frequency is greater than zero, that is, a stepped manner of the plurality of bursts in the detection signal is upward stepping. If the stepped bandwidth is less than zero, it may be understood that the stepped frequency is less than zero, that is, the stepped manner of the plurality of bursts in the detection signal is downward stepping. If the stepped bandwidth is equal to zero, it may be understood that the stepped frequency is equal to zero, and start frequencies of the bursts are the same.

In some possible implementations, when the stepped bandwidth is not equal to zero, a first reference line corresponding to the cell under test may be determined based on the stepped bandwidth. Reference cells corresponding to the cell under test may be determined based on the first reference line. Peak value comparison may be performed on the cell under test based on the reference cells corresponding to the cell under test. To be specific, performing peak value comparison on the cell under test in the second manner, or performing peak value comparison on the cell under test in the third manner may include: determining the first reference line corresponding to the cell under test, where a slope of the first reference line is determined based on the stepped bandwidth; and determining, based on the first reference line, the reference cells corresponding to the cell under test.

In some possible implementations, the detection signal may be the FMCW signal, and the FMCW signal may include a plurality of chirps. To be specific, the plurality of bursts in the detection signal may be the plurality of chirps, each burst may be one chirp, and a bandwidth of the chirp may be a single chirp bandwidth. The first reference line may be determined based on the stepped bandwidth and the single chirp bandwidth. The first reference line corresponding to the cell under test may intersect with the cell under test.

In some possible implementations, performing FFT interpolation calculation on the returned signal of the detection signal may include: obtaining sampling data of the returned signal of the detection signal; and performing fast Fourier transform on the sampling data and N pieces of data whose values are zero, to determine the first spectrogram.

In some possible implementations, a ratio of N to a quantity of pieces of the sampling data is equal to a ratio of the stepped bandwidth to the bandwidth of the burst.

In some possible implementations, a sum of N and the quantity of pieces of the sampling data is an integer power of 2. For example, the quantity of pieces of the sampling data is 510, N may be 2, and the sum of N and the quantity of pieces of the sampling data is 2 to a power of 9.

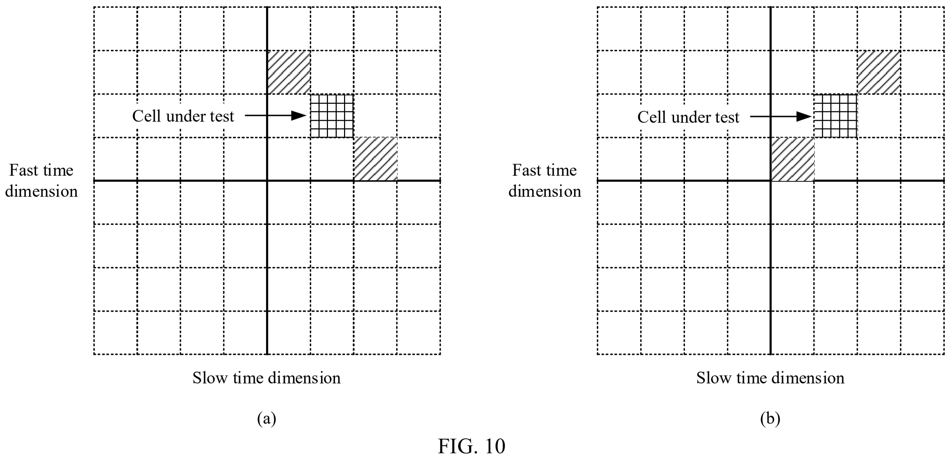

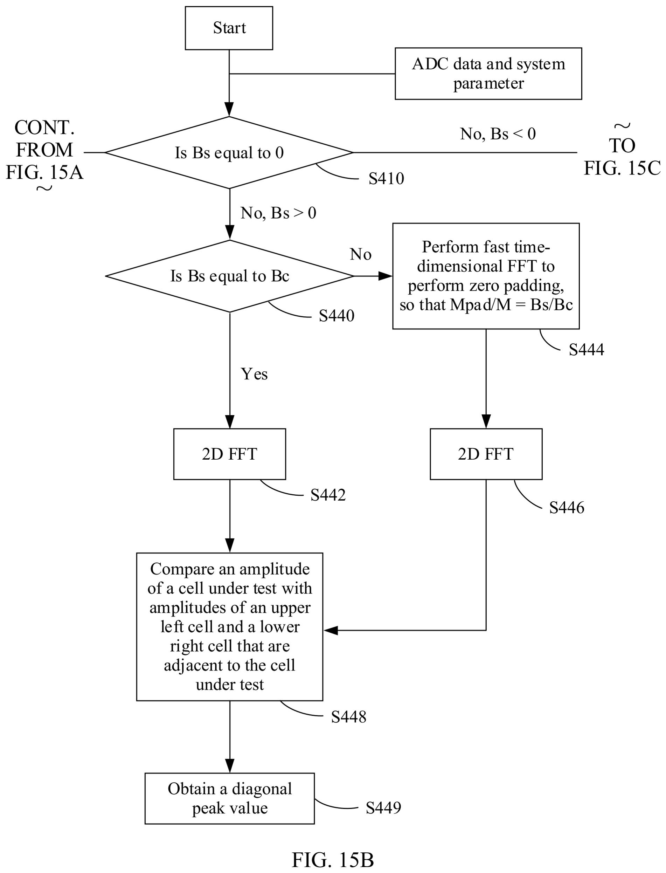

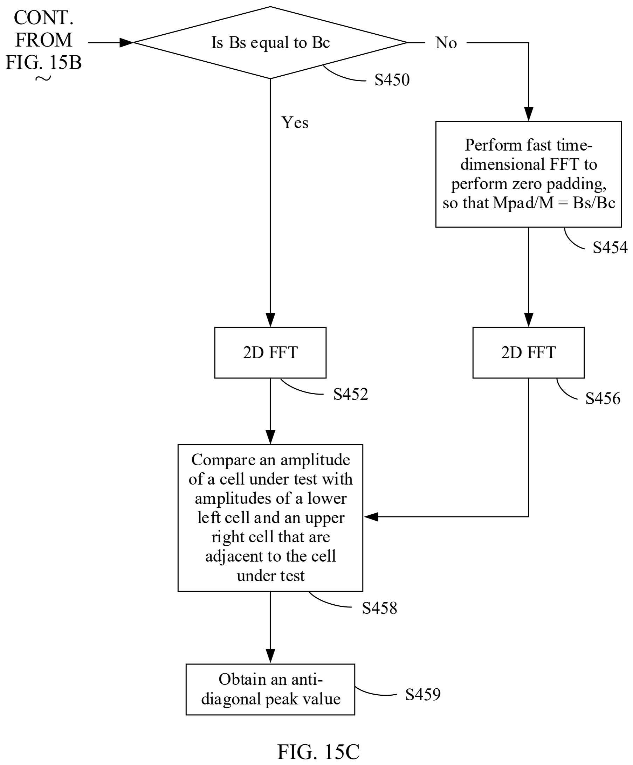

The following uses an example in which the detection signal is a stepped FMCW signal to briefly describe the method 300 with reference to FIG. 10 to FIG. 15A, FIG. 15B, and FIG. 15C. Method embodiments in FIG. 10 to FIG. 15A, FIG. 15B, and FIG. 15C may be understood as an extension of the method 300.

For example, FIG. 10 is a diagram of another signal processing scenario according to an embodiment of this application. For example, as shown in (a) in FIG. 10, when the upward stepped FMCW signal is used, the upper left cell and the lower right cell of the cell under test may be used as reference cells of the cell under test. When an amplitude of the cell under test is greater than amplitudes of the reference cells of the cell under test, the cell under test may be determined as the peak value cell (which may also be referred to as a "diagonal peak value"). The peak value comparison manner may be understood as the second manner in the method 300. For another example, as shown in (b) in FIG. 10, when the downward stepped FMCW signal is used, the lower left cell and the upper right cell of the cell under test may be used as reference cells of the cell under test. When the amplitude of the cell under test is greater than the amplitudes of the reference cells of the cell under test, the cell under test may be determined as the peak value cell (which may also be referred to as an "anti-diagonal peak value"). This may be understood as the third manner used in the method 300 to perform peak value comparison on the cell under test.

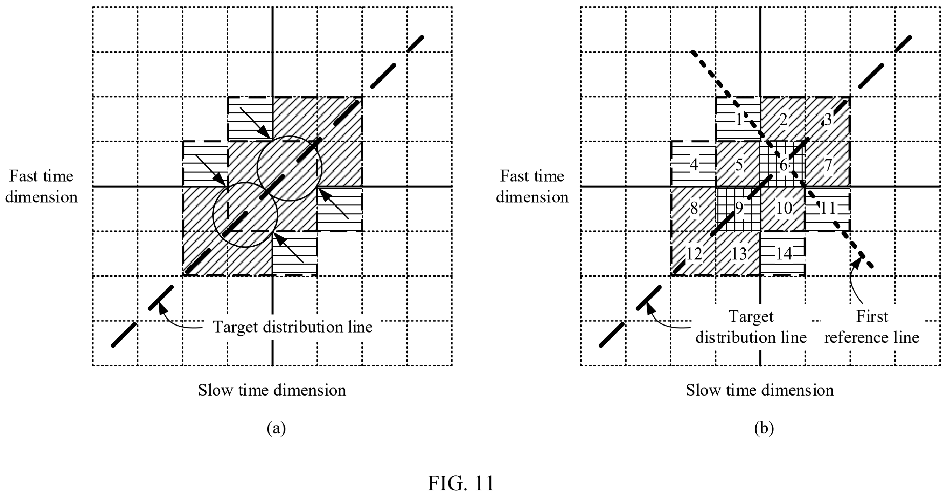

The following uses the upward stepped FMCW signal as an example to briefly describe, with reference to FIG. 11, a manner of determining the reference cells of the cell under test.

For example, FIG. 11 is a diagram of another signal processing scenario according to an embodiment of this application. For example, when the upward stepped FMCW signal is used, distribution of the extension target on a range-Doppler-dimensional spectrogram may be as shown in (a) in FIG. 11, and a distribution line of the target (which may also be referred to as a target distribution line) is no longer perpendicular to the slow time dimension. A perpendicular line of a target distribution line corresponding to the cell under test may intersect with the cell under test, and intersect with the reference cells of the cell under test. The perpendicular line corresponding to the cell under test may be understood as the first reference line in the method 300. For another example, as shown in (b) in FIG. 11, for the cell 6, the perpendicular line passing through the target distribution line of the cell 6 may pass through the cell 1 and a cell 11, the upper left cell 1 and the lower right cell 11 of the cell 6 may be used as reference cells of the cell 6, and whether the cell 6 is the diagonal peak value is determined. When the cell 6 is the diagonal peak value, a range and a speed of the target may be determined based on a location of the cell 6 on the spectrogram. For another example, as shown in (b) in FIG. 11, the target distribution line passes through the cell 6, two reference cells (that is, the cell 1 and a cell 11) corresponding to the cell 6 are respectively located on two sides of the target distribution line, and the perpendicular line of the target distribution line corresponding to the cell 6 intersects with the cell 1 and the cell 11. For another example, the first reference line corresponding to the cell under test may be determined based on a slope of a target distribution line of a static extension target on the two-dimensional spectrogram.

Because the slope of the target distribution line is related to a stepped bandwidth of the stepped FMCW signal, and the reference cells are distributed on the perpendicular line of the target distribution line, energy amplitudes of the reference cells may be considered as extensions of energy of the target. In this embodiment of this application, the reference cells of each cell under test can be determined based on a feature of the stepped FMCW signal, and then a peak value cell can be determined, which can improve reporting point data of an FMCW waveform. This can fully use data of a radar point cloud, thereby improving contour estimation and classification identification capabilities for the target.

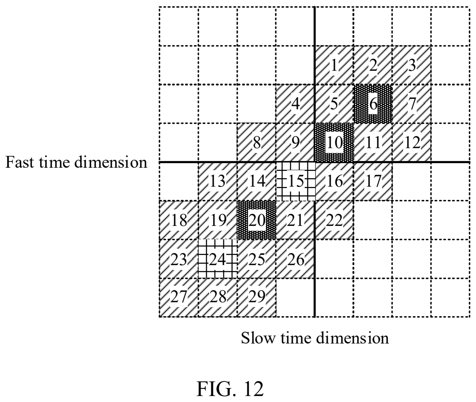

For ease of description, the following briefly describes, with reference to FIG. 12, peak value cell determining methods that are in FIG. 10 and FIG. 11 and that are used in the scenario shown in FIG. 8.

For example, FIG. 12 is a diagram of another signal processing scenario according to an embodiment of this application. For example, the target distribution line may be determined based on (a) in FIG. 10, and cells corresponding to the target #1 and a cell under test in the cells may be determined with reference to (b) in FIG. 10. Reference cells of each cell under test may be determined by using the method in FIG. 9, and when an energy amplitude of each cell under test is greater than energy amplitudes of the reference cells of the cell under test, the cell under test is determined as the diagonal peak value. In an embodiment, as shown in FIG. 12, cells 6, 10, 15, 20, and 24 are diagonal peak values. It should be understood that the cells 6, 10, and 20 are also the two-dimensional peak value cells in (c) in FIG. 8. To be specific, a quantity of peak value cells determined by using the diagonal peak value may be greater than or equal to a quantity of determined two-dimensional peak value cells, and may be greater than or equal to a quantity of extension targets, which may avoid missing reporting. In this embodiment of this application, determining the diagonal peak value can improve the reporting point data in the stepped manner used by the detection signal.

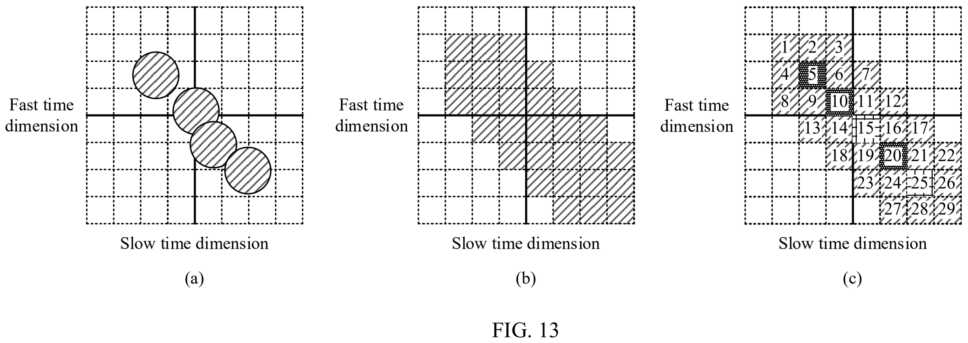

For example, FIG. 13 is a diagram of another signal processing scenario according to an embodiment of this application. The stepped FMCW signal is used as an example in FIG. 13 to briefly describe a method for determining a speed and a range of a large-sized target (for example, denoted as a target #2) by using the signal processing manner in FIG. 10. As shown in (a) in FIG. 13, when the downward stepped FMCW signal is used, an extension target corresponding to the target #2 is distributed in the shape of the diagonal line on the two-dimensional spectrogram. A CFAR processing result of the extension target may be as shown in (b) in FIG. 13. In an embodiment, as shown in (c) in FIG. 13, cells 5, 10, 15, 20, and 25 are anti-diagonal peak values, and cells 6, 10, and 20 are the two-dimensional peak value cells. In this embodiment of this application, determining the speed and the range of the target #2 by using the anti-diagonal peak value can improve the reporting point data of the FMCW waveform in combination with the feature of the FMCW signal, so that data of the radar point cloud can be fully used.

In some possible implementations, when the stepped bandwidth is not equal to the single chirp bandwidth, using diagonal cells (that is, the upper left cell and the lower right cell, or the lower left cell and the upper right cell) of the cell under test as the reference cells of the cell under test may obtain an extension of an adjacent target, which causes a determining error in a peak grouping process. Interpolation may be performed in the fast time dimension, so that a connection line between the diagonal cells of the cell under test is perpendicular to the target distribution line.

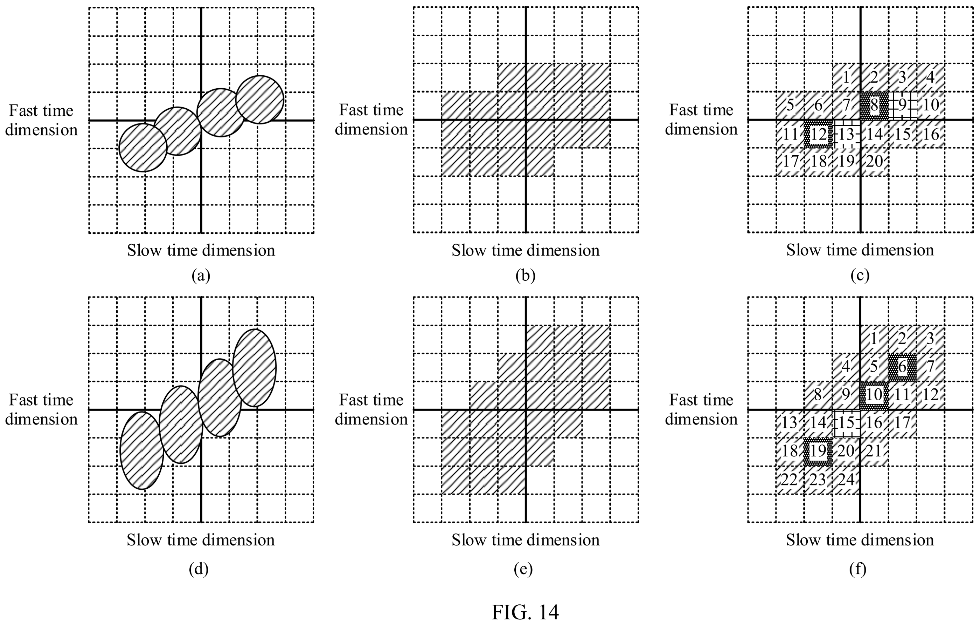

For example, FIG. 14 is a diagram of another signal processing scenario according to an embodiment of this application. (a) in FIG. 14 shows distribution of the extension target on the two-dimensional spectrogram when the downward stepped FMCW signal is used, and the stepped bandwidth is not equal to the single chirp bandwidth. As shown in (b) in FIG. 14, in the CFAR processing result of the extension target, the connection line between the upper left cell and the lower right cell of a target under test is not perpendicular to the target distribution line. In an embodiment, as shown in (c) in FIG. 14, cells 8, 9, 12, and 13 are the diagonal peak values, and cells 8 and 9 are the two-dimensional peak value cells. Because the connection line between the upper left cell and the lower right cell of the target under test is not perpendicular to the target distribution line, in a process of determining the peak value cell in this manner may be interfered by the adjacent target.

To avoid this case, FFT interpolation may be performed in the fast time dimension, that is, zero padding processing may be performed on sampling data of the stepped FMCW signal, so that the connection line of the diagonal cells of the cell under test is perpendicular to the target distribution line. For example, with FFT interpolation performed in the fast time dimension, distribution of the target on a range-speed-dimensional spectrogram may be as shown in (d) in FIG. 14. For another example, CFAR processing is performed on (d) in FIG. 14, and a result shown in (e) in FIG. 14 may be obtained. As shown in (e) in FIG. 14, the cell under test located on the target distribution line may be perpendicular to the connection line between the upper left cell and the lower right cell that are adjacent to the cell under test. Correspondingly, it may be determined that cells 6, 10, 15, and 19 are the diagonal peak values, and the cells 6, 10, and 19 are the two-dimensional peak values. In this manner, a probability of a peak value determining error can be reduced.

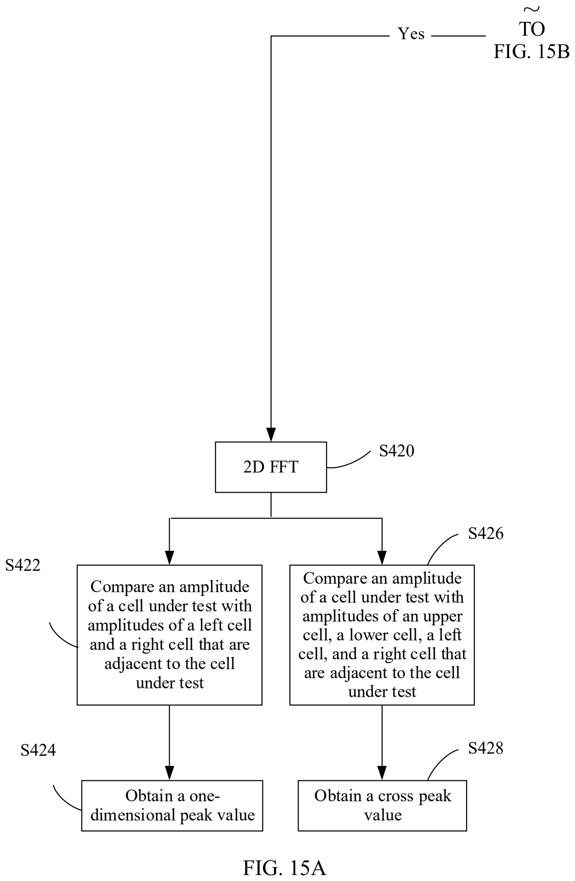

For example, FIG. 15A, FIG. 15B, and FIG. 15C are a schematic flowchart of a signal processing method according to an embodiment of this application. The method 400 may include some or all of the following steps.

S410: Determine whether the stepped bandwidth is zero.

For example, whether the stepped bandwidth is zero may be determined based on ADC sampling data and/or a system parameter, that is, whether the stepped FMCW signal is used is determined.

When the stepped bandwidth is zero, step S420 may be performed; or when the stepped bandwidth is greater than zero, step S440 may be performed; or when the stepped bandwidth is less than zero, step S450 may be performed.

In other words, when the stepped frequency is zero, step S420 may be performed; or when the stepped frequency is greater than zero, step S440 may be performed; or when the stepped frequency is less than zero, step S450 may be performed.

S420: Perform fast time-dimensional and slow time-dimensional FFT.

For example, when the stepped frequency of the used FMCW signal is zero, fast time-dimensional and slow time-dimensional FFT may be performed according to the method in FIG. 6 and/or FIG. 7, to obtain the range-Doppler-dimensional spectrogram.

When one-dimensional peak value comparison is performed, step S422 may be performed; and when cross peak value comparison is performed, step S426 may be performed.

S422: Compare an energy amplitude of the cell under test with energy amplitudes of a left cell and a right cell that are adjacent to the cell under test.

For example, the left cell and the right cell that are adjacent to the cell under test may be used as reference cells of the cell under test.

S424: Obtain a one-dimensional peak value.

When the amplitude of the cell under test is greater than the amplitudes of the reference cells of the cell under test, the cell under test may be determined as the one-dimensional peak value cell. For example, as shown in (c) in FIG. 6, the cell 2 may be determined as the one-dimensional peak value cell based on amplitudes of the cell 2 and the reference cells (that is, the cell 1 and the cell 3) of the cell 2.

S426: Compare the energy amplitude of the cell under test and with energy amplitudes of an upper cell, a lower cell, a left cell, and a right cell that are adjacent to the cell under test.

For example, the upper cell, the lower cell, the left cell, and the right cell that are adjacent to the cell under test may be used as reference cells of the cell under test.

In some possible implementations, when a cross peak value is determined, an upper cell and a lower cell that are adjacent to a one-dimensional peak value cell under test may be used as reference cells of the one-dimensional peak value cell.

S428: Obtain the cross peak value.

When the amplitude of the cell under test is greater than the amplitudes of the reference cells of the cell under test, the cell under test may be determined as the two-dimensional peak value cell. For example, as shown in (c) in FIG. 6, the cells 2, 5, and 8 are the one-dimensional peak value cells. When an amplitude of the cell 5 is greater than amplitudes of the cell 2 and the cell 8, the cell 5 may be determined as the two-dimensional peak value.

For example, when Δf is greater than zero, the detection signal uses an upward stepped manner, and step S440 may be performed. For example, the peak value cell may be determined in the manner in any one of the embodiments in FIG. 10 to FIG. 13.

For example, when Δf is less than zero, the detection signal uses a downward stepped manner, and step S450 may be performed. For example, the peak value cell may be determined in the manner in the method embodiment in FIG. 10 or FIG. 13.

S440: Determine whether the stepped bandwidth (denoted as Bs) is equal to the single chirp bandwidth (denoted as Bc).

When Bs is equal to Bc, step S442 may be performed; or when Bs is not equal to Bc, step S444 may be performed.

S442: Perform two-dimensional FFT.

The range-Doppler-dimensional spectrum can be obtained through two-dimensional FFT, and distribution of the target on the spectrogram can be obtained. For example, the two-dimensional spectrogram shown in (a) in FIG. 8 may be obtained. That is, FFT calculation may be performed when interpolation is not performed on the returned signal of the detection signal.

S444: Perform zero padding processing in the fast time dimension, so that a ratio of a quantity of pieces of zero-padded data (for example, denoted as Mpad) to a quantity (for example, denoted as M) of pieces of sampling data of the FMCW signal is equal to Bs/Bc.

For example, when Mpad/M is equal to Bs/Bc through zero-padding interpolation processing, a connection line between corresponding diagonal reference cells of each cell under test may be perpendicular to the target distribution line.

S446: Perform two-dimensional FFT.

In an embodiment, two-dimensional FFT is performed after zero padding processing, which may obtain the two-dimensional spectrogram shown in (d) in FIG. 14. That is, FFT interpolation calculation on the returned signal of the detection signal may be implemented by using steps S444 and S446.

S448: Compare the amplitude of the cell under test with amplitudes of an upper left cell and a lower right cell that are adjacent to the cell under test.

In an embodiment, as shown in (a) in FIG. 10, when the upward stepped FMCW signal is used, the reference cells of the cell under test are the upper left cell and the lower right cell of the cell under test.

S449: Obtain the diagonal peak value.

For example, the amplitude of each cell under test is compared with the amplitudes of the reference cells of the cell under tests on the spectrogram, to obtain a plurality of diagonal peak values on the spectrogram. For example, as shown in FIG. 12, the diagonal peak values are the cells 6, 10, 15, 20, and 24.

S450: Determine whether Bs is equal to Bc.

When Bs is equal to Bc, step S452 may be performed; or when Bs is not equal to Bc, step S454 may be performed.

S452: Perform two-dimensional FFT.

S454: Perform zero padding processing in the fast time dimension, so that a ratio of a quantity of pieces of zero-padded data (denoted as Mpad) to a quantity (denoted as M) of pieces of sampling data of the FMCW signal is equal to Bs/Bc.

S456: Perform two-dimensional FFT.

S458: Compare the amplitude of the cell under test with amplitudes of a lower left cell and an upper right cell that are adjacent to the cell under test.

S459: Obtain the anti-diagonal peak value.

In some possible implementation scenarios, when zero-padding processing is performed, a sum of the quantity of pieces of zero-padded data and the quantity of pieces of sampling data of the FMCW signal may be an approximate integer power of 2, to adapt to an FFT acceleration algorithm.

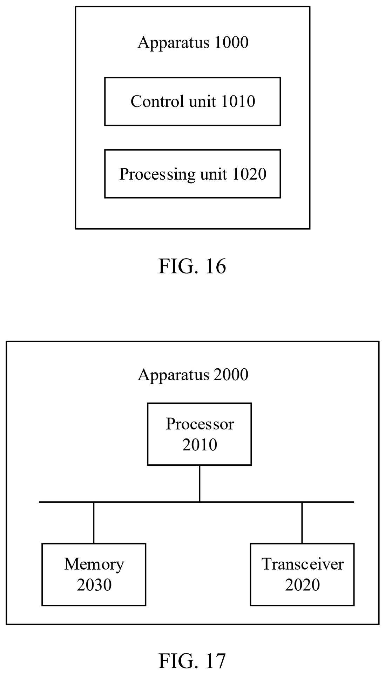

The foregoing describes in detail the methods provided in embodiments of this application with reference to FIG. 3 to FIG. 15A, FIG. 15B, and FIG. 15C. The following describes in detail the apparatuses provided in embodiments of this application with reference to FIG. 16 and FIG. 17. Descriptions of apparatus embodiments correspond to the descriptions of the method embodiments. Therefore, for content that is not described in detail, refer to the foregoing method embodiments.

For example, FIG. 16 is a block diagram of a signal processing apparatus 1000 (referred to as an apparatus 1000) according to an embodiment of this application. The apparatus may include a control unit 1010 and a processing unit 1020.

The apparatus 1000 may include units for performing any method in FIG. 3 to FIG. 15A, FIG. 15B, and FIG. 15C, and units in the apparatus 1000 may be configured to perform corresponding procedures in any method embodiments in FIG. 3 to FIG. 15A, FIG. 15B, and FIG. 15C.

When the apparatus 1000 is configured to perform the method 300 in FIG. 9, the control unit 1010 may be configured to perform step S310 in the method 300, and the processing unit 1020 may be configured to perform steps S320 and S350 in the method 300.

Specifically, the control unit 1010 may be configured to control a detection apparatus to transmit a detection signal, where the detection signal includes a plurality of bursts. The processing unit 1020 may be configured to: determine a stepped bandwidth of the detection signal; and when the stepped bandwidth is zero, perform peak value comparison on a cell under test in a first manner, where the cell under test is a cell whose energy amplitude is greater than or equal to a first threshold, the cell under test belongs to a first spectrogram, and the first spectrogram is obtained through spectrum analysis on a returned signal of the detection signal; or when the stepped bandwidth is greater than zero, perform peak value comparison on the cell under test in a second manner; or when the stepped bandwidth is less than zero, perform peak value comparison on the cell under test in a third manner.

For example, the apparatus 1000 may be a radar sensor in FIG. 2, or may be the vehicle in FIG. 2, or may be a terminal (for example, the computing platform in FIG. 1) that is in the vehicle and that is configured to perform signal processing on the radar, or may be a processor or a chip in the terminal.

Optionally, the processing unit 1020 may be configured to: determine a first reference line corresponding to the cell under test, where a slope of the first reference line is determined based on the stepped bandwidth of the detection signal; determine, based on the first reference line, reference cells corresponding to the cell under test; and perform peak value comparison between the cell under test and the reference cells that correspond to the cell under test.

Optionally, the processing unit 1020 may be configured to: when the stepped bandwidth of the detection signal is the same as a bandwidth of the burst, select an upper left cell and a lower right cell of the cell under test to perform peak value comparison; or when the stepped bandwidth of the detection signal is different from a bandwidth of the burst, perform FFT interpolation calculation on the returned signal of the detection signal, and select an upper left cell and a lower right cell of the cell under test to perform peak value comparison.

Optionally, the processing unit 1020 may be configured to: when the stepped bandwidth of the detection signal is the same as a bandwidth of the burst, select a lower left cell and an upper right cell of the cell under test to perform peak value comparison; or when the stepped bandwidth of the detection signal is different from a bandwidth of the burst, perform FFT interpolation calculation on the returned signal of the detection signal, and select a lower left cell and an upper right cell of the cell under test to perform peak value comparison.

Optionally, the detection signal is a stepped frequency-modulated continuous wave FMCW signal, the stepped FMCW signal includes a plurality of chirps (chirps), each of the plurality of bursts is one chirp, a bandwidth of the chirp is a single chirp bandwidth, and the processing unit 1020 is configured to: determine, based on a ratio of the stepped bandwidth to the single chirp bandwidth, the first reference line corresponding to the cell under test.

Optionally, the processing unit 1020 may be configured to: obtain sampling data of the returned signal of the detection signal; and perform FFT on the sampling data and N pieces of data whose values are zero, to obtain the first spectrogram.

Optionally, a ratio of N to a quantity of pieces of the sampling data is equal to a ratio of the stepped bandwidth to the bandwidth of the burst.

Optionally, a sum of N and the sampling data is an integer power of 2.

Optionally, the processing unit 1020 may be configured to: select a left cell and a right cell of the cell under test to perform peak value comparison; or select an upper cell, a lower cell, a left cell, and a right cell of the cell under test to perform peak value comparison.

It should be understood that division into the units of the foregoing apparatus is merely logical function division. During actual implementation, all or some of the units may be integrated into one physical entity, or may be physically separated. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

In a specific implementation process, the control unit 1010 may be implemented by at least one transceiver or a transceiver-related circuit, and the processing unit 1020 may be implemented by at least one processor or a processor-related circuit. In an example, one or more processors may determine the stepped bandwidth of the detection signal. In an example, the one or more processors may perform peak value comparison on the cell under test in the first manner. In an example, the one or more processors may perform peak value comparison on the cell under test in the second manner. For example, in a specific implementation process, the apparatus 1000 may be the vehicle shown in FIG. 2, or a signal processing apparatus disposed in the vehicle, or a processor or a chip disposed in the vehicle. In still another embodiment, the apparatus may be the intelligent driving device 100 in FIG. 1, or a chip or a processor disposed in the intelligent driving device.

For example, FIG. 17 is a block diagram of another control apparatus 2000 (referred to as an apparatus 2000) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, to receive/send some parameters through the interface circuit 2020. Optionally, the memory 2030 may be coupled to the processor 2010 through an interface, or may be integrated with the processor 2010.

In some possible implementations, the apparatus 2000 may be disposed in the intelligent driving device 100 shown in FIG. 1.

It should be noted that the interface circuit 2020 may include but is not limited to a transceiver apparatus such as an input/output interface (input/output interface), to implement communication between the apparatus 2000 and another device or a communication network. For example, communication with a radar and/or an internal circuit of the intelligent driving device may be implemented by using the interface circuit 2020.

An embodiment of this application further provides a signal processing system. The system includes a radar and the foregoing apparatus 1000 or apparatus 2000.

An embodiment of this application further provides a computer program product. The computer program product includes computer program code. When the computer program code is run on a computer, the computer is enabled to perform any one of the method embodiments in FIG. 4 to FIG. 9 and any possible implementation of the method embodiments.

An embodiment of this application further provides a computer-readable storage medium. The computer-readable storage medium stores program code or instructions. When the computer program code or the instructions is/are executed by a processor of a computer, the processor is enabled to implement any one of the method embodiments in FIG. 3 to FIG. 15A, FIG. 15B, and FIG. 15C and any possible implementation of the method embodiments.

An embodiment of this application further provides a chip, including a circuit, configured to perform any one of the method embodiments in FIG. 3 to FIG. 15A, FIG. 15B, and FIG. 15C and any possible implementation of the method embodiments.

An embodiment of this application further provides a cloud server. The cloud server may include the apparatus 1000 or the apparatus 2000.

It should be understood that, for the purpose of convenient and brief description, for a detailed working process and beneficial effect of the foregoing system, apparatus, and unit, refer to a corresponding process in the foregoing method embodiments. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal processing method, comprising:
controlling a detection apparatus to transmit a detection signal, wherein the detection signal comprises a plurality of bursts;
determining a stepped bandwidth of the detection signal; and
when the stepped bandwidth is zero, performing peak value comparison on a cell under test in a first manner, wherein the cell under test is a cell whose energy amplitude is greater than or equal to a first threshold, the cell under test belongs to a first spectrogram, and the first spectrogram is obtained through spectrum analysis on a returned signal of the detection signal; or
when the stepped bandwidth is greater than zero, performing peak value comparison on the cell under test in a second manner; or
when the stepped bandwidth is less than zero, performing peak value comparison on the cell under test in a third manner.

2. The method according to claim 1, wherein performing peak value comparison on the cell under test in the second manner, or performing peak value comparison on the cell under test in the third manner comprises:
determining a first reference line corresponding to the cell under test, wherein a slope of the first reference line is determined based on the stepped bandwidth of the detection signal;
determining, based on the first reference line, reference cells corresponding to the cell under test; and
performing peak value comparison between the cell under test and the reference cells that correspond to the cell under test.

3. The method according to claim 1 or 2, wherein performing peak value comparison on the cell under test in the second manner comprises:
when the stepped bandwidth of the detection signal is the same as a bandwidth of the burst, selecting an upper left cell and a lower right cell of the cell under test to perform peak value comparison; or
when the stepped bandwidth of the detection signal is different from a bandwidth of the burst, performing fast Fourier transform FFT interpolation calculation on the returned signal of the detection signal, and selecting an upper left cell and a lower right cell of the cell under test to perform peak value comparison.

4. The method according to claim 1 or 2, wherein performing peak value comparison on the cell under test in the third manner comprises:
when the stepped bandwidth of the detection signal is the same as a bandwidth of the burst, selecting a lower left cell and an upper right cell of the cell under test to perform peak value comparison; or
when the stepped bandwidth of the detection signal is different from a bandwidth of the burst, performing fast Fourier transform FFT interpolation calculation on the returned signal of the detection signal, and selecting a lower left cell and an upper right cell of the cell under test to perform peak value comparison.

5. The method according to any one of claims 2 to 4, wherein the detection signal is a stepped frequency-modulated continuous wave FMCW signal, the stepped FMCW signal comprises a plurality of chirps chirps, each of the plurality of bursts is one chirp, a bandwidth of the chirp is a single chirp bandwidth, and determining the first reference line corresponding to the cell under test comprises:
determining, based on a ratio of the stepped bandwidth to the single chirp bandwidth, the first reference line corresponding to the cell under test.

6. The method according to claim 3 or 4, wherein performing fast Fourier transform FFT interpolation calculation on the returned signal of the detection signal comprises:
obtaining sampling data of the returned signal of the detection signal; and
performing fast Fourier transform on the sampling data and N pieces of data whose values are zero, to obtain the first spectrogram.

7. The method according to claim 6, wherein a ratio of N to a quantity of pieces of the sampling data is equal to a ratio of the stepped bandwidth to the bandwidth of the burst.

8. The method according to claim 6 or 7, wherein a sum of N and the sampling data is an integer power of 2.

9. The method according to claim 1, wherein performing peak value comparison on the cell under test in the first manner comprises:
selecting a left cell and a right cell of the cell under test to perform peak value comparison; or
selecting an upper cell, a lower cell, a left cell, and a right cell of the cell under test to perform peak value comparison.

10. A signal processing apparatus, comprising:
a control unit, configured to control a detection apparatus to transmit a detection signal, wherein the detection signal comprises a plurality of bursts; and
a processing unit, configured to determine a stepped bandwidth of the detection signal; and
when the stepped bandwidth is zero, perform peak value comparison on a cell under test in a first manner, wherein the cell under test is a cell whose energy amplitude is greater than or equal to a first threshold, the cell under test belongs to a first spectrogram, and the first spectrogram is obtained through spectrum analysis on a returned signal of the detection signal; or
when the stepped bandwidth is greater than zero, perform peak value comparison on the cell under test in a second manner; or
when the stepped bandwidth is less than zero, perform peak value comparison on the cell under test in a third manner.

11. The apparatus according to claim 10, wherein the processing unit is configured to:
determine a first reference line corresponding to the cell under test, wherein a slope of the first reference line is determined based on the stepped bandwidth of the detection signal;
determine, based on the first reference line, reference cells corresponding to the cell under test; and
perform peak value comparison between the cell under test and the reference cells that correspond to the cell under test.

12. The apparatus according to claim 10 or 11, wherein the processing unit is configured to:
when the stepped bandwidth of the detection signal is the same as a bandwidth of the burst, select an upper left cell and a lower right cell of the cell under test to perform peak value comparison; or
when the stepped bandwidth of the detection signal is different from a bandwidth of the burst, perform fast Fourier transform FFT interpolation calculation on the returned signal of the detection signal, and select an upper left cell and a lower right cell of the cell under test to perform peak value comparison.

13. The apparatus according to claim 10 or 11, wherein the processing unit is configured to:
when the stepped bandwidth of the detection signal is the same as a bandwidth of the burst, select a lower left cell and an upper right cell of the cell under test to perform peak value comparison; or
when the stepped bandwidth of the detection signal is different from a bandwidth of the burst, perform fast Fourier transform FFT interpolation calculation on the returned signal of the detection signal, and select a lower left cell and an upper right cell of the cell under test to perform peak value comparison.

14. The apparatus according to any one of claims 11 to 13, wherein the detection signal is a stepped frequency-modulated continuous wave FMCW signal, the stepped FMCW signal comprises a plurality of chirps chirps, each of the plurality of bursts is one chirp, a bandwidth of the chirp is a single chirp bandwidth, and the processing unit is configured to:
determine, based on a ratio of the stepped bandwidth to the single chirp bandwidth, the first reference line corresponding to the cell under test.

15. The apparatus according to claim 12 or 13, wherein the processing unit is configured to:
obtain sampling data of the returned signal of the detection signal; and
perform fast Fourier transform on the sampling data and N pieces of data whose values are zero, to obtain the first spectrogram.

16. The apparatus according to claim 15, wherein a ratio of N to a quantity of pieces of the sampling data is equal to a ratio of the stepped bandwidth to the bandwidth of the burst.

17. The apparatus according to claim 15 or 16, wherein a sum of N and the sampling data is an integer power of 2.

18. The apparatus according to claim 10, wherein the processing unit is configured to:
select a left cell and a right cell of the cell under test to perform peak value comparison; or
select an upper cell, a lower cell, a left cell, and a right cell of the cell under test to perform peak value comparison.

19. A signal processing apparatus, wherein the apparatus comprises:
a memory, configured to store a computer program; and
a processor, configured to execute the computer program stored in the memory, to enable the apparatus to perform the method according to any one of claims 1 to 9.

20. A signal processing system, wherein the system comprises a radar and a computing platform, and the computing platform comprises the apparatus according to any one of claims 10 to 19.

21. An intelligent driving device, wherein the intelligent driving device comprises the apparatus according to any one of claims 10 to 19, or comprises the system according to claim 20.

22. A computer-readable storage medium, wherein the computer-readable storage medium stores a computer program, and when the computer program is executed by a computer, the method according to any one of claims 1 to 9 is implemented.

23. A computer program product, wherein the computer program product comprises computer program code, and when the computer program code is run on a computer, the method according to any one of claims 1 to 9 is performed.
